# EUROPEAN PATENT APPLICATION

(11) **EP 0 979 670 A1**
(43) Date of publication of application: **16.02.2000**
(21) Application number: 98202713.8
(22) Date of filing: 13.08.1998
(51) Int. Cl.: B01D 53/00, B01D 53/26, B01D 5/00

(54) **Apparatus for removing condensable material from a gas**

(71) Applicant: Flair Filtration & Drying B.V., 4878 AJ Etten-Leur (NL)
(72) Inventor: Van der Wekken, Bartel Jan Cornelis, 4926 AE Lage Zwaluwe (NL); Barnwell, James W., Stanley, North Carolina 28164 (US)
(74) Representative: Ottevangers, Sietse Ulbe

(57) **Abstract**

Apparatus for removing condensable material from a gas, in which the gas is caused to flow in series through a chiller, a separator and a reheater. A predetermined charge of refrigerant is passed in a closed cycle through the chiller, a compression unit in which energy is added to the refrigerant, and through a compact auxiliary condenser sized to remove the energy added by the compression unit at no load conditions, and then through the reheater and the chiller, completing the closed cycle. The auxiliary condenser is of a type with in a static situation almost no natural convection. The system comprises a ventilator for directing air towards the condenser. The ventilator is actuated by means of a switch operatively connected to a temperature sensor in the refrigerant system, such that the ventilator is turned on above a predetermined temperature of the refrigerant and turned off below said temperature.

## Description

The present invention relates to an apparatus for removing condensable material from a gas and, more particularly, to removing the condensable material by lowering the temperature of the gas to condense the condensable material from the gas.

It is often desirable when using a gas, such as compressed air, that the gas be substantially free of condensable material, such as water. One way to remove such condensable material is cooling the gas below the condensation temperature of the condensable material, condensing the condensable material, and then draining this condensable material from the gas. Then the gas may continue on to the desired application substantially free of the condensable material.

A particularly important application of removing such condensable material from a gas is to remove water from compressed air, i.e., drying the compressed air. In compressed air systems, the water vapor within the air may form the liquid phase during compression or temperature changes of the air. An undesirable amount of water in compressed air lines can cause many problems, such as clogged filters, accuracy variation of instrumentation, reduction of the air pressure, promotion and acceleration of corrosion, surface blemishes in paint spraying operations, water spotting of plastic parts during blow-molding, clogged sand blasters, etc., and often requires manually operated drain traps to remove condensed moisture from compressed air lines. Removing the water from the compressed air prior to using the compressed air in the end application reduces or eliminates these problems and significantly reduces the costs and losses associated therewith.

Typical conventional refrigerated air dryers pass the compressed air through a refrigerant-to-compressed air heat exchanger where the compressed air is cooled, condensing condensable material contained in the airstream. The condensate is then removed by a separation device and the compressed air continues on to its end application. In some dryers, the dehumidified air is passed through an air-to-air heat exchanger to precool the incoming humid compressed air and to reheat the exiting dehumidified compressed air.

The refrigeration cycle in such typical conventional refrigerated air dryers passes low pressure liquid refrigerant into the refrigerant-to-compressed air heat exchanger which removes heat from the compressed airstream and boils, becoming mostly vapor. The low pressure refrigerant gas then passes into an accumulator that collects and stores any excess liquid refrigerant, ensuring that only gas leaves the accumulator to go on to the refrigerant compressor. Liquid slugging into the refrigerant compressor may damage the compressor and lead to an early failure of the equipment and may reduce the efficiency of the refrigeration cycle. The low pressure refrigerant gas is then compressed and exits the compressor as a high pressure hot refrigerant gas. The high pressure hot refrigerant gas is then cooled and condensed into a liquid in a refrigerant condenser. This high pressure liquid refrigerant is then stored in a liquid receiver until it is needed. As the high pressure liquid refrigerant leaves the liquid receiver, it passes through a refrigerant filter/dryer that removes moisture and particulates from the refrigerant, and proceeds to a thermal expansion valve, where the temperature and pressure of the refrigerant are lowered. After passing through the thermal expansion valve, the refrigerant proceeds to the refrigerant-to-compressed air heat exchanger to complete the cycle.

PCT-application WO 98/03248 discloses an improved method and apparatus for removing condensable material from a gas (e.g., air), by causing the gas flow in series through a chiller for cooling the gas and condensing the condensable material from the gas, then through a separator for separating the condensed material from the gas and draining the condensate, and then through a reheater to reheat the gas prior to its return to service.

The cooling in the chiller is provided by passing a predetermined charge of refrigerant in a closed refrigeration cycle through the chiller to cool the gas by absorbing heat from the gas and evaporating. The refrigerant is then passed through a motor-driven compression unit, then through an auxiliary condenser sized to remove from the refrigerant the energy that is added to the refrigerant by the compression unit under no load conditions, and then flows through the reheater, where it reheats the gas prior to the gas returning to service, which also further condenses and subcools the refrigerant. Then the refrigerant passes back through the chiller, completing the closed cycle.

In practice the apparatus disclosed in WO 98/03248 can be used over a broad range of temperatures. At ambient temperatures below about 12° C and temperatures of the gas to be dried in the lower ranges there is a risk that the temperature of the refrigerant in the chiller decreases to below 0°C, thus freezing the gas side of the chiller, so that the gas line is blocked.

It is desirable to provide an apparatus for removing condensable material from a gas in which the risk of freezing the condensate in the gas lines in the chiller is minimal.

It is an object of the present invention to provide an improved apparatus for removing condensable material from a gas, minimizing the risk of freezing the chiller.

The present invention provides an apparatus for removing condensable material from a gas, wherein said auxiliary condenser in said closed refrigerant system is a compact condenser comprising a tube and cooling ribs or like elements which cooling elements are disposed close to each other such that in a static situation almost no natural convection exists, and that said closed refrigerant system comprises a ventilator for directing air towards said auxiliary condenser, which ventilator is being actuated by means of a switch which switch is operatively connected to a temperature detector or pressure sensor provided in said closed refrigerant system near said auxiliary condenser, such that the switch puts on the ventilator if the temperature or pressure sensed by said detector increases to above a chosen temperature or a chosen pressure and puts off the ventilator in case said temperature drops below said chosen temperature, or said pressure decreases to below sais chosen pressure, respectively.

In a preferred embodiment of the apparatus according to the invention the switch is operatively connected to a temperature sensor and means are provided to adjust the chosen temperature at which the switch puts on/off the ventilator.

In the apparatus according to the invention the predetermined charge of refrigerant preferably is sized to cause the refrigerant that exits the reheater to be in a substantially gaseous state when there is no flow of gas through the reheater and to cause the pressure of the refrigerant exiting the reheater to generally decrease as the flow of gas through the reheater increases.

In the apparatus of the invention the auxiliary condenser is of the compact tube/plate fin type. Such compact type condenser has cooling ribs that are positioned adjacent each other such that almost no natural convection can take place. Forced convection occurs by means of a ventilator disposed near the condenser which ventilator in operation forces an air stream over the cooling ribs. The ventilator is turned on and off by means of a switch which operates under command of a pressure or temperature sensor, but preferably a temperature sensor in the refrigerant system. The temperature sensor actuates the switch at a predetermined temperature of the refrigerant. Below such predetermined temperature the ventilator is switched off and above said temperature the ventilator is switched on. Thus the auxiliary condenser performs a cooling function only above the predetermined temperature. Below said temperature the auxiliary condenser performs no or almost no cooling function, so that the risk of freezing of the gas system (the chiller) is very minimal.

The auxiliary condenser of the compact type in the apparatus of the invention has a size that is less than about 10% of the size of the auxiliary condenser proposed in WO 98/03248. The overall size of the apparatus therefore can be kept considerably smaller.

The invention will be further illustrated at the hand of the drawings in which:
Fig. 1 is a schematic representation of a prior art dryer as disclosed in WO 98/03248, and
Fig. 2 is a schematic representation of the present invention.

While the present invention may be used to remove a wide variety of condensable material from many different gases, the invention will be detailed with respect to removing water from compressed air.

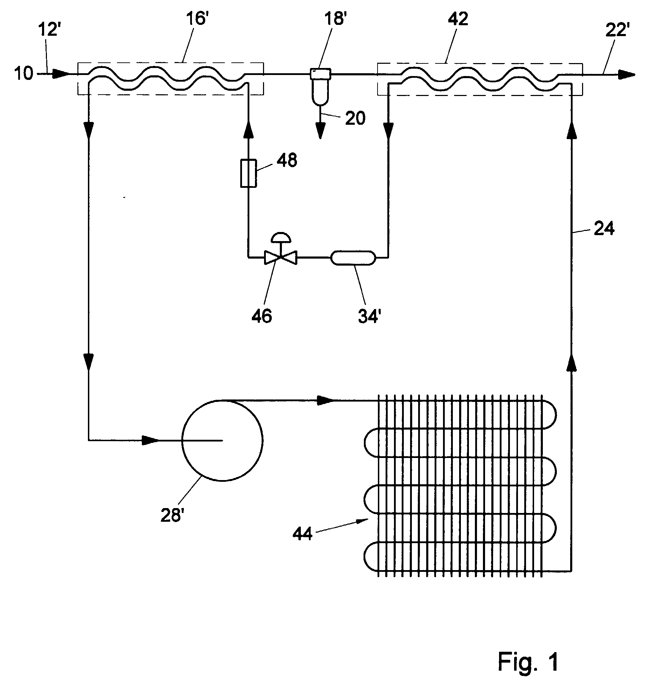

Fig. 1 illustrates a prior art refrigerated dryer, wherein a compressed air system includes a compressed air inlet 12' through which compressed air 10 enters a conventional chiller 16', in which the temperature of the compressed air 10 is lowered below the condensation temperature of condensable material contained within compressed air 10, and such condensable material condenses. The compressed air then enters a conventional separator 18', wherein the condensate 20 is separated and drained, before continuing through reheater 42, where the compressed air 10 absorbs heat from the refrigerant 24 (illustrated by flow arrows in Fig. 1) prior to exiting through compressed air outlet 22'.

Fig. 1 also illustrates a closed refrigeration cycle, wherein a predetermined charge of the refrigerant 24 passes through the chiller 16', where it absorbs heat from the compressed air 10 and boils. The gaseous refrigerant 24 then exits the chiller 16' and proceeds to a conventional motor-driven refrigerant compression unit 28'.

The compression unit 28' has a compressor and an electric drive motor. The compression unit 28' compresses the refrigerant 24 and adds energy in the form of heat to the refrigerant 24 as it passes through the compression unit 28'. In one embodiment, the gaseous refrigerant 24 is passed over windings of the motor prior to being compressed in order to cool the motor. The hot, compressed gaseous refrigerant 24 then passes through a conventional, static auxiliary condenser 44 which is sized to remove from the refrigerant 24 the heat added thereto by the compression unit 28' under no load conditions. The refrigerant 24 then passes through the reheater 42, wherein it transfers heat to the compressed air 10 before the compressed air 10 exits through outlet 22'. In the reheater 42, the refrigerant 24 condenses as a result of the heat transferred to the compressed air 10 and then exits reheater 42 to enter chiller 16', wherein it cools the compressed air 10 flowing into the inlet 12' and through the chiller 16', completing the closed refrigeration cycle.

In one embodiment, the refrigerant 24 exiting the reheater 42 first passes through a conventional filter/dryer 34', wherein water and particulate matter are removed, then passes through an expansion device 46. The refrigerant 24 then passes by a conventional temperature-sensitive color change label 48, from which the approximate temperature of the refrigerant 24 may be determined to evaluate whether the apparatus is properly operating.

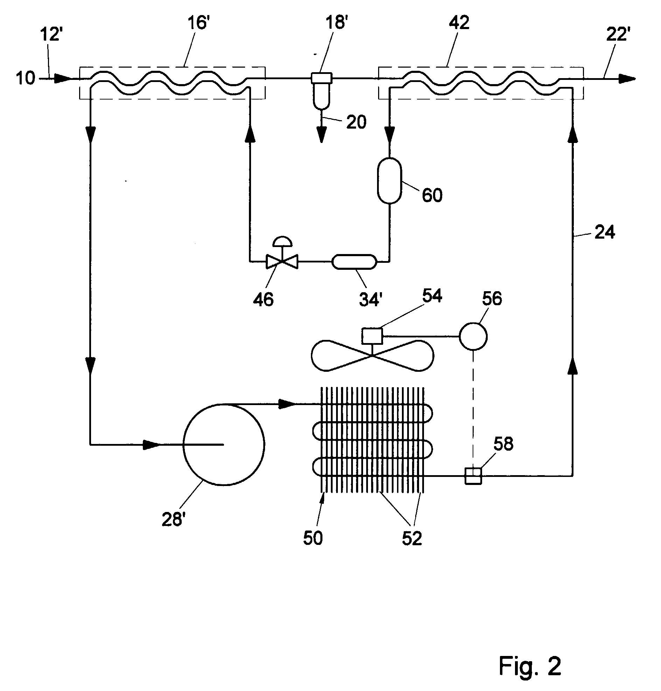

Fig. 2 illustrates an embodiment of the apparatus of the invention. Identical elements as in the apparatus of Fig. 1 have been identified with identical reference numbers. A major difference in the apparatus of the invention is embodied by the auxiliary condenser 50. The auxiliary condenser 50 is of the compact tube/plate fin type. The condenser 50 comprises cooling ribs 52 that are placed so close to each other that almost no natural convection can take place over the ribs. A ventilator 54 is positioned adjacent the condenser 50. In operation said ventilator 54 forces an air stream over the cooling ribs 52.

The ventilator 54 is actuated by a temperature controlled switch 56, the operation of which is controlled by a temperature sensor 58 in the refrigerant cycle near the auxiliary condenser 50. The arrangement is such that the switch 56 turns on the ventilator 54 as soon as the temperature sensor 58 senses that the temperature has increased to above a predetermined temperature. The switch 56 turns off the ventilator 54 if the temperature sensed drops to below the predetermined temperature.

Preferably the arrangement is such that the predetermined temperature can be varied at the need of the user of the apparatus. A man skilled in the art will know how to make such arrangement.

In the apparatus of the invention the predetermined charge of refrigerant 24 is sized to cause the refrigerant exiting the reheater 42 to be substantially in a gaseous state when there is no flow of compressed air 10 through the reheater 42 and is further sized to cause the pressure of the refrigerant 24 exiting the reheater 42 to generally decrease as the flow of compressed air 10 through the reheater 42 increases. This pressure response is opposite to operating characteristics of earlier conventional dryers in which the refrigerant pressure decreases as the compressed air 10 flow decreases. This operating pressure characteristic also yields significant subcooling of the refrigerant 24 exiting the reheater 42, resulting in increased refrigeration capacity and improved efficiency.

In the apparatus of the present invention, the refrigerant 24 pressure increases as the flow of compressed air 10 decreases. This pressure increase ensures that the chiller 16' does not freeze up and that adequate refrigerant pressure and temperature are present at the inlet to the compression unit 28'. Such operating pressure characteristics also result in increased refrigeration capacity (lower refrigerant pressure) as the load (compressed air 10 flow) increases, thus improving refrigeration efficiency and providing this increased capacity when it is most needed - at increased compressed air 10 flows.

In the closed refrigeration cycle of the apparatus of the invention preferably a liquid receiver 60 is provided between the reheater 42 and the expansion device 46. The refrigerant 24 charge of the apparatus is chosen such and the volume of the liquid receiver 60 is chosen such that the system is optimally balanced under no load and under full load conditions. The volume of the liquid receiver should be substantial smaller than the refrigerant 24 charge volume. Preferably the volume of the liquid receiver 60 is chosen to be less than 50% of the volume of the liquid refrigerant 24 charge. Under no load conditions a minimum refrigerant 24 charge is needed to ensure stable and proper operation of the expansion device 46.

The compression unit 28' itself acts as a liquid separator: liquid flowing back to the compressor is boiling off by the high pressure, hot, refrigerant gas. A too high gas content in the refrigerant flow through the reheater results in a poor balance, a low refrigerant pressure under no load and under full load conditions, resulting in a poor efficiency of the system.

At full load the maximum refrigerant 24 charge is restricted in order to ensure a proper amount of sub-cooling, combined with a decreasing refrigerant discharge pressure as the flow of compressed air (or gas) through the apparatus increases.

With the properly sized predetermined charge of refrigerant 24, the refrigerant does not flash across the expansion device 46 at full compressed air 10 flow due, at least in part, to the increased amount of subcooling of the refrigerant 24. Because of the lower refrigerant discharge pressure from the reheater 42 and the increased amount of refrigerant subcooling, a conventional expansion valve is not necessary, and an expansion device 46, such as a capillary tube, constant pressure expansion valve, orifice, or the like, will suffice.

The preferred compression unit 28' is a conventional, hermetically sealed, refrigerant-cooled piston compressor, in which the refrigerant cools the electric motor that drives the compressor by passing over the motor windings (not shown) prior to entering the compressor. Other compressors may also be used, as well as other drive means. If the motor used is not cooled by the refrigerant 24, then the compact auxiliary condenser 50 is still sized to remove the energy inherently put into the system by the compression unit at no load, but the heat added by cooling the motor will not be a factor in the size of the compact auxiliary condenser 50. This energy can be determined by a heat balance calculation, calculated for no load conditions. By using a motor that is compact and is cooled by the refrigerant 24, as discussed above, the motor and compressor may be disposed together in a relatively compact compression unit 28' that allows for greater mobility and flexibility of locations for the apparatus. Such arrangement also allows the compression unit 28' to be sealed to minimize contaminants interfering with the operation of the motor and compressor, and extends the life of the unit.

Calculating the heat balance and sizing the compact auxiliary condenser 50 based on no load conditions helps to ensure proper operating characteristics at no load to avoid freeze up. When there is compressed air 10 flow through the system, then the reheater 42 operates to remove any additional energy added to the refrigerant 24 by virtue of the increased load.

By sizing the compact auxiliary condenser 50 in this manner, and by sizing the predetermined charge of refrigerant 24 as discussed above, the need for a liquid receiver, a hot gas bypass valve, a suction accumulator, a de-superheating valve, and a suction liquid heat exchanger is eliminated and the refrigeration system is simplified without any loss of performance and control. In fact, because the dynamics of the system are controlled to achieve the result that the outlet pressure of the refrigerant 24 from the reheater 42 generally decreases as the flow of compressed air 10 through the reheater 42 increases, the efficiency of the refrigeration cycle is significantly improved and the capacity is increased, even with substantially fewer components. This reduction in the number of components reduces capital costs, maintenance expenses, outages, and equipment failures.

It is preferred that the refrigerant used in the invention is R-134a for a compressed air cycle in which water is condensable material to be removed. It is to be noted that other halogenated hydrocarbon refrigerants, such as R-22, may also be used in this particular application. It is important to note that the refrigerant used may be any suitable refrigerant, based upon material conditions, the particular gas from which the condensable material is to be removed, the particular condensable materials, operating temperatures, costs, etc., without departing from the spirit of the invention. The invention as described herein is particularly suitable for medium to high temperature refrigerants, but use with a wide variety of refrigerants is anticipated.

The chiller 16' and reheater 42 may be of any conventional heat exchanger design, although counterflow coiled tube-by-tube heat exchangers have been noted to provide acceptable results while minimizing the size and cost associated with these heat exchangers. It is noted that tube-in-tube heat exchangers also provide satisfactory results, particularly for lager systems. While counterflow heat exchangers are preferred, the present invention may also be practiced with parallel flow heat exchangers.

The separator 18' may be any device for removing condensate from gas, such as a mechanical separator, demister, coalescing filter, or any other similar device without departing from the spirit of the invention. demister, coalescing filter, or any other similar device without departing from the spirit of the invention.

It is to be noted that the system may be sized such that the temperature of the compressed air 10 at the outlet 22' is greater than the temperature of the compressed air 10 at the inlet 12' without departing from the spirit of the invention.

Typical temperatures of the air at the inlet 12' are less than 60° C. Generally, the temperature of the refrigerant 24 transmitted to the refrigerant compression unit 28' should be kept less than about 35°C to prevent damage to the compressor and to ensure maximum refrigeration efficiency.

## Claims

1. An apparatus for removing condensable material from a gas comprising:
a flow through gas system which includes in series a chiller (16') for cooling said gas and condensing said condensable material from said gas, a separator (18') for separating said condensed material from said gas and draining away said condensate, and a reheater (42) for reheating said gas;
a closed refrigerant system which passes a predetermined charge of refrigerant (24) in series through said chiller (16') to cool said gas by absorbing heat from said gas and evaporating, through a compression unit (28') in which said refrigerant (24) is compressed and an amount of energy is added thereto, then through an auxiliary condenser (50) sized to remove from said refrigerant (24) the energy added thereto by said compression unit (28') at no load conditions, and then through said reheater (42) and back to said chiller (16'), characterized in that said auxiliary condenser (50) in said closed refrigerant system is a compact condenser comprising a tube and cooling ribs (52) or like elements which cooling elements (52) are disposed close to each other such that in a static situation almost no natural convection exists, and that said closed refrigerant system comprises a ventilator (54) for directing air towards said auxiliary condenser, which ventilator (54) is being actuated by means of a switch (56) which switch (56) is operatively connected to a temperature detector or pressure sensor (58) provided in said closed refrigerant system near said auxiliary condenser (50), such that the switch (56) puts on the ventilator (54) if the temperature or pressure sensed by said detector (58) increases to above a chosen temperature or a chosen pressure and puts off the ventilator (54) in case said temperature drops below said chosen temperature, or said pressure decreases to below said chosen pressure, respectively.

2. The apparatus of claim 1, characterized in that the switch (56) is operatively connected to a temperature sensor (58) and that means are provided to adjust the chosen temperature at which the switch puts on/off the ventilator (54).

3. The apparatus of claims 1 or 2, characterized by further comprising a refrigerant expansion device (46) through which the refrigerant (24) passes after leaving the reheater (42) and before entering the chiller (16').

4. The apparatus of any of the claims 1-3, characterized by comprising a refrigerant filter/dryer (34') to remove water and particulate matter from said refrigerant (24) through which said refrigerant (24) passes after leaving said reheater (42) and before entering said expansion device (46).

5. The apparatus of any of the claims 1-4, characterized in that said compression unit (28') includes a compressor and an electric drive motor, said motor having windings over which said refrigerant passes to cool said motor before said refrigerant is compressed.

6. The apparatus of any of the claims 1-5, characterized in that the refrigerant is a halogenated hydrocarbon.

7. The apparatus of claim 6, characterized in that the refrigerant is a halogenated hydrocarbon selected from the group consisting of R-22 and R-134a.

8. The apparatus of any of the claims 1-7, characterized by further comprising a liquid receiver (60) between the reheater (42) and the expansion device (46).
